# EUROPEAN PATENT APPLICATION

(11) **EP 1 378 155 A1**
(43) Date of publication of application: **07.01.2004**
(21) Application number: 03101937.5
(22) Date of filing: 30.06.2003
(51) Int. Cl.: A01B 63/26, A01B 21/08

(54) **A disc entity, a soil tillage entity and an agricultural machine provided with these**

(30) Priority: 03.07.2002 SE 2020774
(71) Applicant: Väderstad-Verken AB, 590 21 Väderstad (SE)
(72) Inventor: Stark, Crister, 590 21, VÄDERSTAD (SE)
(74) Representative: Stein, Jan Anders Lennart

(57) **Abstract**

An agricultural machine such as a seed drill or a soil tillage machine comprises at least one soil tillage entity (23a, 23b) with a plurality of disc entities (2), and a towing device (21) for connecting to a tractor (22). In accordance with the invention, at least those disc entities that till the soil compressed by the tractor wheels arc provided with adjusting means (8, 10, 11, 12, 16, 17, 18, 44, 46) for adjustment of the vertical distance of the disc (4) relative to the said fastening device (14).

## Description

### BACKGROUND OF THE INVENTION

The present invention relates to an agricultural machine such as a seed drill or a soil tillage machine, comprising at least one soil tillage entity with a plurality of disc entities, and a towing device for connecting to a tractor,

A similar agricultural machine is marketed under the trademark 'Carrier' by the company Väderstad-Verken AB. The prior art disc entities are fastened to the beam with springy rubber connections, which give the discs a desirable flexibility, so that the disc can spring away upon encountering a hard object, such as a stone.

Another known agricultural machine marketed by the company 'Lemken' is provided with a disc entity with the capacity for springing away on encountering stones. In this case, the flexibility is ensured by helical springs.

Both these known devices have, however, a disadvantage in that the disc entity or entities that are disposed behind the wheels of the towing tractor cannot manage to sufficiently till the soil that has been compressed by the tractor wheels and/or the compressed soil is deeper than the working depth of the soil tillage entity. This results in 'wheel tracks' in the growing crop.

### SUMMARY OF THE INVENTION

One objective of the present invention is to improve the soil tillage capacity of the known disc entity.

This objective has been achieved by an agricultural machine of the initially described type, wherein at least those disc entities that till the soil compressed by the tractor wheels are provided with adjusting means for adjustment of the vertical distance of the disc relative to the said fastening device. Hereby, the capability to set a different working depth for one or more disc entities relative to the other disc entities is achieved. Furthermore, the disc entities of an agricultural machine that are disposed, or can be expected to be disposed, behind the wheels of a tractor connected in front of the machine are furnished in accordance with the invention. Hereby, the soil compressed by the wheels of the tractor can also be tilled, which in turn means that seed can germinate here, so that no 'wheel tracks' are visible in the growing crop. This results in turn in higher yield.

Preferably, the disc entity comprises at least one disc, an arm to which the said disc is rotatably connected, and a fastening device for connecting to said soil tillage entity, wherein the arm extends essentially radially from the disc in the direction of the said fastening device.

The said adjusting means advantageously comprise a plurality of openings, in which a hub on the disc is intended to be arranged, wherein the openings are disposed at different vertical distances from the said fastening device.

The said adjusting means preferably comprise an axle, around which the said arm is rotatable, and a locking device for detachable fastening in a predetermined position. Hereby, the vertical distance of the disc relative to the fastening device can be adjusted by means of a turning movement.

The fastening device suitably comprises an adjusting member including the said axle, around which the said arm is rotatably arranged, wherein the said locking device comprises means for preventing the movement of the arm relative to the adjusting member. Hereby, a simple way to set the arm in the desired position is achieved.

The locking device advantageously comprises at least a first hole in the arm and at least a second hole in the adjusting member and also a locking member, wherein the said first hole is at least in one position adapted to be aligned with the said second hole, and the locking member is adapted to be placed in these aligned holes.

Alternatively or additionally, the locking device comprises a toothed connection arranged at the adjusting member and the arm in such a way that they are opposite each other for different positions of the arm relative to the adjusting member.

Alternatively or additionally, the locking device comprises a friction connection adapted for preventing movement between the adjusting member and the arm.

Preferably, the agricultural machine comprises a frame or a beam, wherein the disc entity is suspended on the said frame or beam by means of flexible members.

Suitably, the said flexible members comprise at least one rubber element.

### DRAWING SUMMARY

In the following, the invention is described in more detail with reference to the attached drawings in which:
Fig. 1 is a side view of a disc entity according to the invention,
Fig. 2 illustrates an agricultural machine arranged with disc entities according to Figure 1,
Fig. 3 illustrates a disc entity according to a second embodiment of the invention,
Fig. 4 illustrates a disc entity according to a third embodiment of the invention, and
Fig. 5 illustrates a disc entity according to a fourth embodiment of the invention.

### DETAILED DESCRIPTION

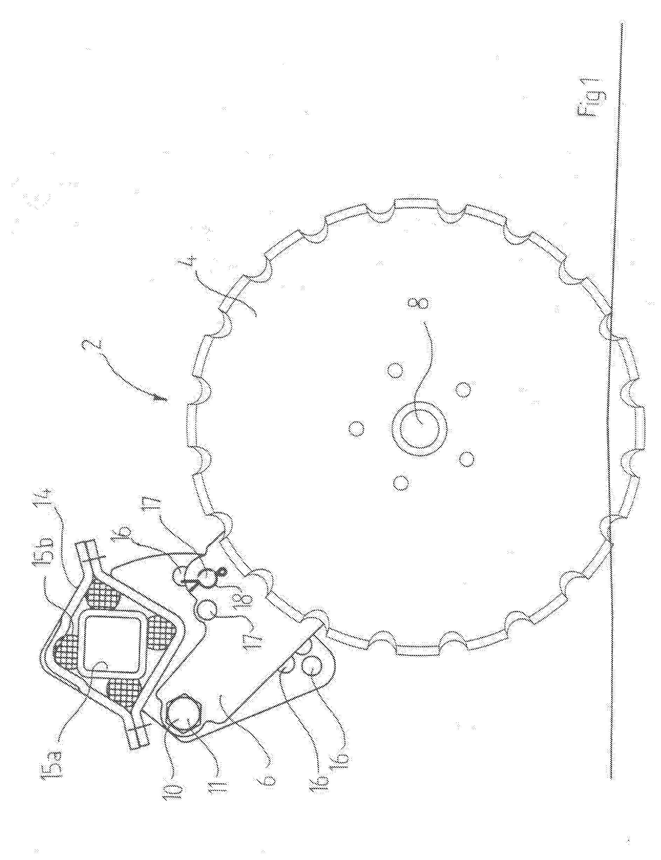

Figure 1 shows diagrammatically a disc entity 2, comprising a disc 4 intended to till the soil. The disc 4 is rotatably arranged at an arm 6 via a hub 8. The arm 6 is turnably arranged via an axle 10 relative to an adjusting member 12, which in turn is immovably arranged via a fastening device 14 in the form of a clamp connection. The fastening device 14 is in a known way flexibly arranged on a beam 15a by means of four springy rubber elements 15b, which extend along the length of the respective clamp connection in the direction of the elongation of the beam 15a. The rubber elements, which are circular cylindrical, permit a movement of the clamp connections 14 around the beam 15a so that the entire disc entity can turn away if it encounters a hard object, such as a stone.

The adjusting member 12 is provided with two rows of penetrating holes 16. Each of these rows defines a circular sector with the axle 10 in the centre of the circular sector, i.e. from which the radii of each circular sector emanate. The axle 10 is comprised of a friction connection 11 in the form of a screw and nut or similar. The arm 6 is provided with two holes 17 intended to be placed in front of any chosen hole of the respective circular sector's holes 16 for insertion of a pin 18 or similar for fixing the arm 6 relative to the adjusting member 12. Only one of the holes 17 stands simultaneously before a hole 16.

When the working depth of the disc is to be set, the friction connection 11 is loosened and the pin 18 is removed. A rotating movement of the arm 6 is performed around the axle 10 until the desired vertical distance of the disc 4 relative to the said fastening device 14 has been achieved. The pin is thereupon put into place in holes 16, 17 and the friction connection 11 is tightened.

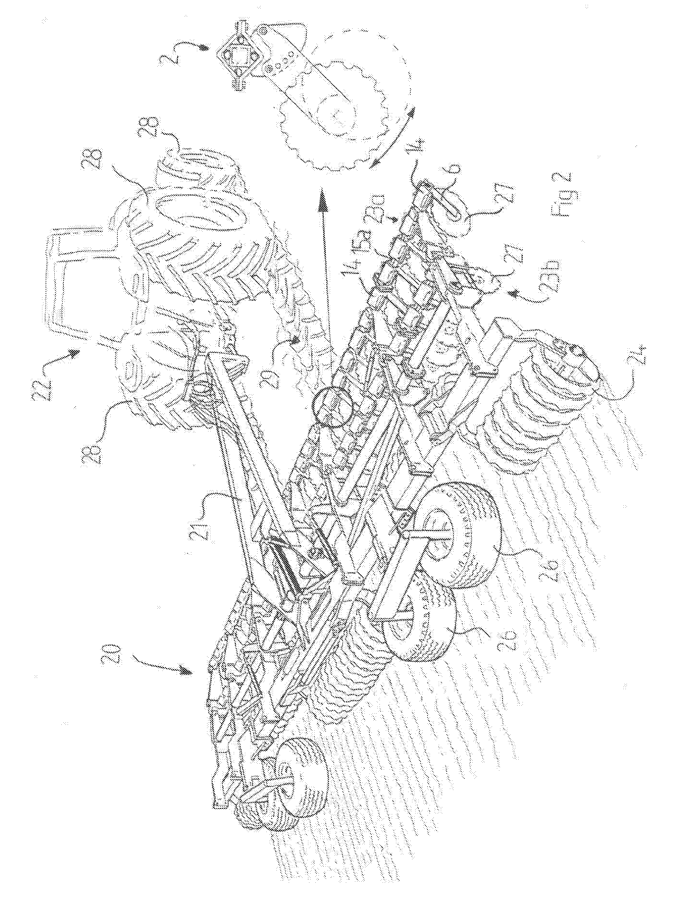

Figure 2 shows an agricultural machine 20 with a towing device 21 connected to a tractor 22 during ongoing soil tillage. The agricultural machine 20 is provided with two soil tillage entities 23a, 23b, disc entities 2 angled in different directions and two rows of ring rollers 24. The wheels 26 are used during transport on roads of the agricultural machine 20, at which time it adopts a not shown U-shape.

The prior art disc entities 27 are rigidly arranged by the clamp connection 14 via the arm 6. There is no adjusting capacity for working depth.

When the tractor is driven on a field, the wheels 28 of the tractor 22 compress the soil so that wheel tracks 29 are formed. The degree of compression is dependent on the soil type, moisture, previous degree of tillage and the weight of the tractor. Adjustable disc entities 2 according to the invention are arranged in the respective soil tillage entity 23a, 23b behind the wheels 28 of the tractor, for tilling the compressed soil in the wheel tracks 29, which in the majority of cases cannot be achieved with the prior art disc entity 27.

The insert shows the disc entity 2 set in a normal position, which corresponds to the position of the non-adjustable disc entities 27. This position is used in cases where the soil is not appreciably compressed, while the dotted line shows the position of the disc entity 2 during tillage of compressed soil.

Adjustment is suitably carried out on the soil that is to be tilled, after a test drive has shown how deep the tractor tracks 29 are.

Both the non-adjustable and adjustable disc entities 27, 2 are flexibly arranged on the beam 15a via the springy rubber elements 15b. When the disc entity 2 is turned, the rubber element 15b is compressed. This is in particular advantageous in the case when the soil has been compressed by the tractor wheels, since it is often more difficult to till than the uncompressed soil.

The number of adjustable disc entities 2 per soil tillage entity 23a, 23b depends on the total wheel width of the tractor used, i.e. how broad are the tracks 29 caused by the wheels 28 of the tractor 22. The number of disc entities 2 can also be dependent on different types of tractors with different wheel widths that can be expected to be used.

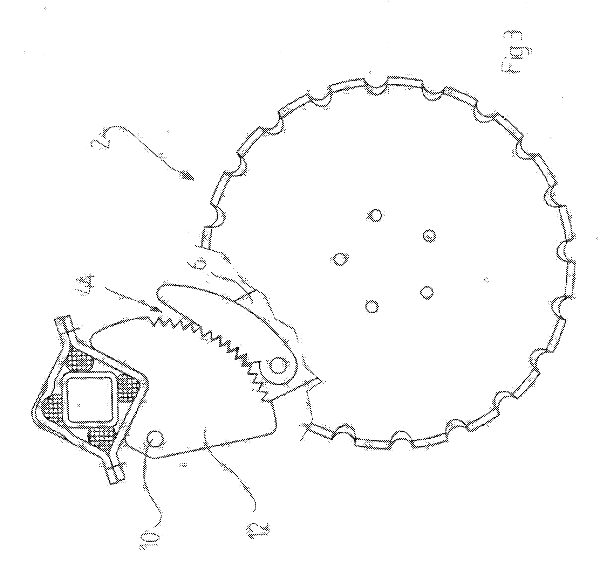

Figure 3 shows a disc entity 2 comprising a toothed connection 44, one portion of which is immovably attached to the adjusting member 12 of one of the disc entities, while the other portion is turnably arranged on the same disc entity's arm 6, which is jointed around axle 10.

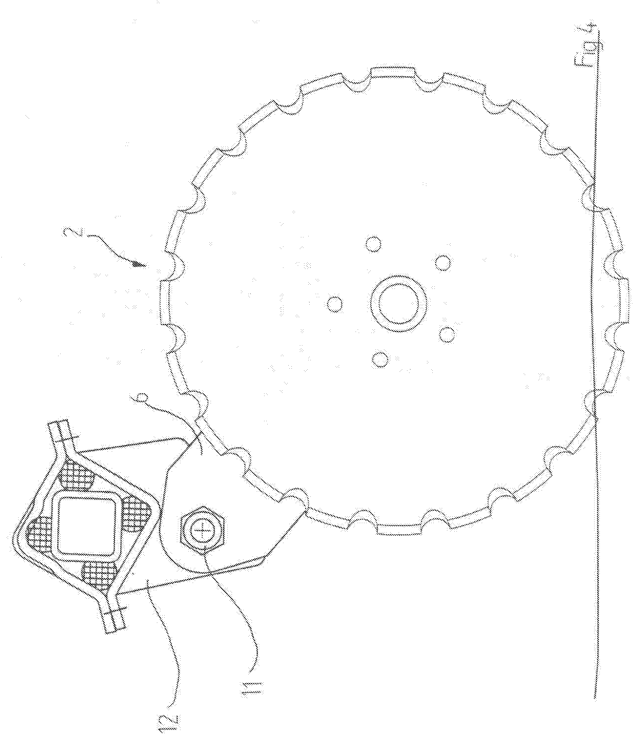

Figure 4 shows how a disc entity's arm 6 can be adjusted relative to the adjusting member 12 simply by tightening the friction connection 11.

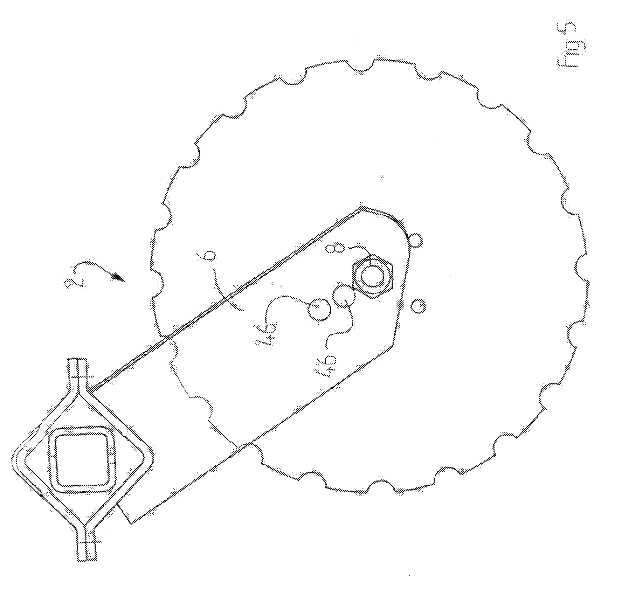

Figure 5 shows an alternative disc entity 2 in accordance with the invention. The arm 6 is provided with openings 46 placed at different heights relative to the ground. By placing the hub 8 in any of the openings 46, the working depth of the disc 8 can be adjusted.

The disc entities can of course be provided with a combination of two or more of the above fastening devices.

The respective disc can also be provided with a device for twisting the disc relative to the direction of travel so that more or less aggressive soil tillage can be achieved.

## Claims

1. An agricultural machine such as a seed drill or a soil tillage machine, comprising at least one soil tillage entity (23a, 23b) with a plurality of disc entities (2), and a towing device (21) for connecting to a tractor (22), **characterised in that** at least those disc entities that till the soil compressed by the tractor wheels are provided with adjusting means (8, 10, 11, 12, 16, 17, 18, 44, 46) for adjustment of the vertical distance of the disc (4) relative to the said fastening device (14).

2. An agricultural machine according to claim 1, wherein the disc entity (2) comprises at least one disc (4), an arm (6) to which the said disc is rotatably connected, and a fastening device (14) for connecting to said soil tillage entity (23a, 23b), wherein the arm extends essentially radially from the disc in the direction of the said fastening device (14).

3. An agricultural machine according to Claim 1 or 2, wherein the said adjusting means (8, 18) comprise a plurality of openings (46), in which a hub (8) on the disc (4) is intended to be arranged, wherein the openings are disposed at different vertical distances from the said fastening device (14).

4. An agricultural machine according to any one of Claims 1 to 3, wherein the said adjusting means (10, 11, 12, 16, 17, 18, 42) comprise an axle (10), around which the said arm (6) is rotatable, and a locking device (11, 18, 44) for detachable fastening in a predetermined position.

5. An agricultural machine according to Claim 4, wherein the fastening device (14) comprises an adjusting member (12) including the said axle (10), around which the said arm (6) is turnably arranged, wherein the said locking device (11, 16, 17, 44) comprises means (11, 18, 44) for preventing movement of the arm (6) relative to the adjusting member (12).

6. An agricultural machine according to Claim 5, wherein the locking device (16, 17) comprises at least a first hole (17) in the arm and at least a second hole (16) in the adjusting member and also a locking member (18), wherein the said first hole is adapted to be placed at least in one position aligned with the said second hole, and the locking member (18) is adapted to be placed in these aligned holes.

7. An agricultural machine according to any one of Claims 4 to 6, wherein the locking device comprises a toothed connection (44) arranged at the adjusting member and the arm in such a way that they are opposite each other for different positions of the arm relative to the adjusting member.

8. An agricultural machine according to any one of Claims 3 to 7, wherein the locking device comprises a friction connection (11) arranged for preventing movement between the adjusting member (12) and the arm (6).

9. An agricultural machine according to any one of the preceding Claims, comprising a frame or a beam (15a) wherein the disc entity is suspended on the said frame or beam by means of flexible members (15b).

10. An agricultural machine A soil tillage entity according to Claim 9, wherein the said flexible members (15b) comprise at least one rubber element.
